# FASCICULE DE BREVET EUROPEEN

(11) **EP 3 384 087 B1**
(45) Date de publication et mention de la délivrance du brevet: **25.12.2019**
(21) Numéro de dépôt: 16802074.1
(22) Date de dépôt: 29.11.2016
(51) Int. Cl.: D21H 21/40, D21H 21/42, B42D 25/29, B42D 25/342, B42D 25/355

(54) **ELEMENT ET DOCUMENT DE SECURITE**
SICHERHEITSELEMENT UND SICHERHEITSDOKUMENT
SECURITY ELEMENT AND SECURITY DOCUMENT

(30) Priorité: 01.12.2015 FR 1561635
(43) Date de publication de la demande: 10.10.2018
(73) Titulaire: Oberthur Fiduciaire SAS, 75008 Paris (FR)
(72) Inventeur: GILLOT, Julien, 35410 Veneffles (FR); CHAPEAU, Guillaume, 35340 Erce Pres Liffre (FR); BORDE, Xavier, 35410 Osse (FR)
(74) Mandataire: Regimbeau
(86) Numéro de dépôt international: PCT/EP2016/079132
(87) Numéro de publication internationale: WO 2017/093250

(56) Documents cités:
- WO-A1-2004/014665
- WO-A1-2010/139930
- WO-A1-2014/174402
- WO-A1-2015/166026

## Description

### DOMAINE DE L'INVENTION

La présente invention est relative à un élément de sécurité multicouche, ainsi qu'à un document de sécurité tel qu'un billet de banque qui le contient.

### ARRIERE PLAN TECHNOLOGIQUE DE L'INVENTION

Les documents de sécurité et plus particulièrement les billets de banque doivent être protégés par des éléments de sécurité. Même si le nombre de contrefaçons détectées n'excède pas en règle générale quelques unités par million de coupures pour la plupart des valeurs en circulation, l'impact des contrefaçons sur l'image du pays émetteur et même sur l'économie tout entière si la contrefaçon devient massive, peut devenir un problème majeur.

Pour éviter cela, les banques centrales tentent de se prémunir contre la contrefaçon et luttent activement, notamment pour augmenter le niveau de sécurité de leurs coupures et maintenir une avance technologique sur les faussaires.

Les billets contrefaits peuvent être détectés à différents niveaux de la chaîne d'utilisation.

Par exemple, cela peut être réalisé dans des banques commerciales où l'on collecte les coupures issues du public ou des commerçants, mais également dans des centres forts affectés au tri et à la remise en circulation et enfin dans les banques centrales.

Ces banques sont équipées de machines de tri automatisé de billets, munies de capteurs capables de détecter certaines propriétés physiques ou électromagnétiques (fluorescence et phosphorescence, présence d'éléments visible sous éclairage infra-rouge, conductivité électrique, magnétisme simple ou à code), certains traceurs avec des signatures spectrales uniques ou autres éléments spécifiques (réponses à des stimuli ou analyses des émissions après excitation). L'intégrité physique du billet ainsi que son degré de salissure sont également appréciées.

Toutefois, si cette fausse monnaie remonte jusqu'à ces centres de collecte, c'est qu'elle a été utilisée par ailleurs frauduleusement sans que cela soit détecté. On comprend ainsi qu'il est préférable de détecter ces faux en amont, de préférence par l'utilisateur premier du billet.

Pour ce faire, le moyen le plus efficace est de doter le document d'éléments de protection dont le fonctionnement est intuitif, facilement authentifiables ou, du moins, sans aucun équipement supplémentaire de telle sorte que par une simple observation ou bien par le toucher, l'on puisse déterminer s'il s'agit d'un vrai document ou non. Par ailleurs, ces éléments sur lesquels l'observateur va se focaliser pour authentifier le document doivent être suffisamment complexes pour ne pas être reproduits facilement par d'éventuels faussaires. La fiabilité de l'élément de sécurité doit donc être garantie *ab initio*, mais aussi dans le temps.

Il existe ainsi de nombreux éléments de sécurité connus du grand public et considérés comme robustes.

Ainsi, on peut par exemple citer le fil de sécurité. Puisqu'il est intégré au moment de la fabrication du papier, il est solidairement lié à la masse de fibres. Son intégration peut être de type « noyée », auquel cas il n'est visible que par observation en transparence.

Mais aujourd'hui, on favorise une intégration dite « window » dans laquelle le fil peut émerger partiellement en surface du papier sous la forme d'un ensemble de fenêtres. Ce type de construction de fil permet en outre de coupler des propriétés de lisibilité automatique par une machine (ex. conductivité électrique, magnétisme) et des éléments authentifiables à l'œil nu dans les fenêtres. Ceci permet une observation en réflexion des parties émergentes du fil et aussi en transparence pour les parties noyées. Par réflexion, on entend le phénomène par lequel les rayons de lumière incidente se réfléchissent à la surface du support.

Traditionnellement, le fil est réalisé à partir d'un support transparent et revêtu par exemple d'un métal de type aluminium. Ce métal est déposé sous vide et forme une couche opaque. Certaines parties métalliques peuvent éventuellement être retirées du support sous forme de texte, de motifs ou toute autre forme de telle sorte qu'elles deviennent transparentes et se démarquent de leur environnement opaque lorsqu'on les observe par transparence. Cette technique de démétallisation partielle est notamment enseignée par le document WO 92/11142, et est connue sous la dénomination commerciale « Cleartext ».

Plus récemment, on a associé à ce type de structure des éléments optiquement variables. Cela est décrit notamment dans le document WO 03/061980 qui propose d'associer une couche à cristaux liquides présentant des effets de changement de couleurs en réflexion à une couche métallique opaque partiellement évidée, formant ainsi un "Cleartext" visible et reconnaissable par observation en transmission.

L'utilisation de métal déposé sous vide, et plus particulièrement de l'aluminium, est largement répandue. Lorsqu'un métal est déposé sous vide, il est à son degré d'oxydation zéro et conserve toutes les propriétés physiques liées à cet état, telles que la résistivité ou la conductivité électrique. On utilise notamment les procédés sous vide d'évaporation, de pulvérisation, de dépôt de vapeur chimique etc. La couche ainsi formée présente l'avantage d'être très fine (de l'ordre de quelques nanomètres), très brillante, réfléchissante et opaque, sous réserve qu'elle soit suffisamment épaisse. Cette épaisseur est mesurée via la densité optique. Usuellement, cette densité optique doit être supérieure à 2-2,5 pour l'aluminium pour obtenir l'opacité requise.

L'inconvénient de ce type de procédés est qu'il est difficile au cours de l'étape de métallisation de modifier l'épaisseur de la couche. Ainsi, si l'on souhaitait réaliser des couches de différentes épaisseurs afin de créer des zones adjacentes opaques et semi transparentes, il faudrait mettre en oeuvre une étape supplémentaire. Ceci est notamment décrit dans le document WO 2004/014665.

L'état de la technique peut également être illustré par les documents WO2014/174402, WO2010/139930 et WO2015/166026.

Afin d'améliorer le niveau de sécurité et de surpasser les contraintes précédemment évoquées, la demanderesse se propose de fournir un élément de sécurité multicouches, qui présente une couche intermédiaire qui, bien qu'elle puisse être obtenue par une autre technique que le dépôt de métal sous vide, puisse présenter un aspect réfléchissant lors d'une observation par réflexion, respectivement un aspect transparent lors d'une observation par transmission.

### RESUME DE L'INVENTION

L'invention concerne un élément de sécurité multicouche, qui comporte un support plan et transparent ou translucide.

Ainsi, selon l'invention, l'une des faces opposées de ce support est revêtue des couches successives suivantes :
a) une couche à effet optique variable, c'est à dire qui, sous observation du support, ménage au moins un changement d'aspect visuellement perceptible à l'œil nu, en fonction des conditions d'observation ;
b) une couche opaque sombre qui présente au moins un ajour ;
c) une couche semi-réfléchissante, c'est à dire qui est réfléchissante lors d'une observation du support en lumière réfléchie, et qui est transparente lors d'une observation du support par transmission, cette couche semi-réfléchissante étant présente au moins partiellement en regard d'une partie dudit ajour ;
d) une couche visible, c'est à dire visible aussi bien en lumière réfléchie que par transmission, qui est présente au moins à l'aplomb de la (des) région(s) où la couche semi-réfléchissante est présente.

Selon d'autres caractéristiques non limitatives et avantageuses de l'invention :
- ladite couche optiquement variable est semi-transparente, c'est à dire réfléchissante en vision par réflexion et transparente en vision par transmission ;
- lesdites couche semi-réfléchissante et couche visible sont dépourvues d'ajours et occupent au moins la même surface que la surface totale de ladite couche opaque ;
- ladite couche semi-réfléchissante est dépourvue d'ajour et occupe au moins la même surface que la surface totale de ladite couche opaque, tandis que ladite couche visible est présente seulement en regard dudit au moins un ajour de ladite couche opaque et selon une surface totale qui est inférieure à celle dudit au moins un ajour ;
- ladite couche semi-réfléchissante est présente seulement en regard dudit au moins un ajour de ladite couche opaque et selon une surface totale qui est inférieure à celle dudit au moins un ajour, tandis que la couche visible est dépourvue d'ajour et occupe au moins la même surface que la surface totale de ladite couche opaque ;
- ladite couche opaque comporte au moins deux ajours, ladite couche semi-réfléchissante et la couche visible sont dépourvues d'ajour et occupent au moins la même surface que la surface totale de ladite couche opaque, cette couche visible étant formée d'au moins deux régions contiguës respectivement d'une première et d'une seconde couleur, chaque couleur s'étendant en regard d'au moins un ajour ;
- lesdites couche semi-réfléchissante et couche visible comportent chacune au moins une fenêtre, que ces fenêtres sont superposées et s'étendent à l'aplomb de chaque ajour tout en étant complètement comprises dans cet ajour, et que ladite couche semi-réfléchissante comporte à l'intérieur de ladite fenêtre au moins une région semi-réfléchissante ;
- ladite couche à effet optique variable présente au moins un ajour ;
- les matériaux des différentes couches sont choisis dans la liste suivante :
   A/ couche à effet optique variable : encre à pigments interférentiels notamment iridescents ou encres variable optiquement ; encres magnétiques variables optiquement ; encres à cristaux liquides ; couches variables optiquement déposées sous vide ; couches présentant des structures diffractantes ou réfléchissantes ; couches présentant des systèmes micro-optiques lenticulaires ou à lentilles ; couches à cristaux photoniques ;
   B/ autres couches : encres incorporant des matériaux présentant des propriétés de conductivité, magnétisme, fluorescence, phosphorescence, de visibilité en infrarouge ; et
- l'élément se présente sous la forme d'un fil ou d'un bandeau ou d'un pavé de forme quelconque.

Par ailleurs, l'invention concerne également un document de sécurité qui intègre un élément selon la caractéristique précédente, qui, lorsqu'il consiste en un fil, est incorporé au sein de celui-ci tout en émergeant à la surface d'au moins une de ses faces visibles, sous la forme d'au moins une fenêtre. Quand il consiste en un bandeau ou un pavé, il est apposé soit directement sur le support soit sur une fenêtre transparente.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue de dessus simplifiée d'un billet de banque qui incorpore un élément de sécurité selon l'invention, qui prend ici la forme d'un bandeau ;
- la figure 2 est une vue en coupe transversale d'une portion d'un élément de sécurité conforme à une première forme de réalisation de l'invention ;
- la figure 3 est une vue de dessus de l'élément de la figure précédente, tel qu'il apparaît aux yeux d'un observateur qui l'observe sous lumière réfléchie ;
- la figure 4 est une vue analogue à la figure précédente, mais montrant l'élément tel qu'il apparaît aux yeux d'un observateur qui l'observe sous lumière transmise, c'est à dire par transparence ;
- les figures 5 à 7 sont des vues analogues aux figures 2 à 4, montrant une deuxième forme de réalisation de l'élément de sécurité ;
- les figures 8 à 10 sont des vues analogues aux figures 2 à 4, montrant une troisième forme de réalisation de l'élément de sécurité ;
- les figures 11 à 13 sont des vues analogues aux figures 2 à 4, montrant une quatrième forme de réalisation de l'élément de sécurité ;
- les figures 14 à 16 sont des vues analogues aux figures 2 à 4, montrant une cinquième forme de réalisation de l'élément de sécurité ;
- les figures 17 à 19 sont des vues analogues aux figures 2 à 4, montrant une sixième forme de réalisation de l'élément de sécurité.

Pour plus de clarté dans toutes les figures et notamment dans les vues en coupe, les dimensions des éléments représentés (longueur, largeur et épaisseur) ne se trouvent pas à l'échelle ou dans de justes proportions les unes par rapport aux autres, afin d'en faciliter la compréhension.

### DESCRIPTION DETAILLEE DE L'INVENTION

Dans l'ensemble de la présente demande de brevet, y compris les revendications, les expressions ci-après ont les définitions qui suivent :
- couche à effet optique variable : Il s'agit d'une couche qui, lorsqu'elle est observée, ménage au moins un changement d'aspect visuellement perceptible à l'œil nu, en fonction des conditions d'observation. Cela comprend donc les effets de changement de couleur par inclinaison du support, rotation etc. Cela comprend également, sans que cela soit limitatif, les effets optiques obtenus par exemple avec des systèmes micro-optiques lenticulaires ou à lentilles, des structures en microrelief réfléchissantes ou diffractantes, les effets de changement de contraste, de brillance (passage d'un aspect brillant à un aspect mat, etc.).
- couche opaque sombre (ou couche de "révélation") : il s'agit d'une couche dont la teinte est suffisamment sombre pour qu'elle absorbe une large partie des rayons incidents qui l'éclairent. Idéalement, elle est noire, mais elle peut également être de couleur bleu foncé, brun sombre, etc.
- couche semi-réfléchissante : il s'agit d'une couche qui est réfléchissante lors d'une observation du support en lumière réfléchie, et qui est transparente lors d'une observation du support par transmission. Autrement dit, il s'agit d'une couche dont la particularité est de ne réfléchir qu'une partie de la lumière qu'elle reçoit, et de laisser passer l'autre partie. Cette particularité est utilisée par exemple dans le domaine de l'optique pour la constitution de miroir sans tain par exemple ou de verres antireflets. Elle peut être réalisée par exemple par une technique de dépôt sous vide, avec une précision telle qu'elle permet de choisir les couleurs transmises ou réfléchies.
- couche visible : Il s'agit d'une couche qui est visible aussi bien à la lumière réfléchie que par transmission. Elle est avantageusement colorée.

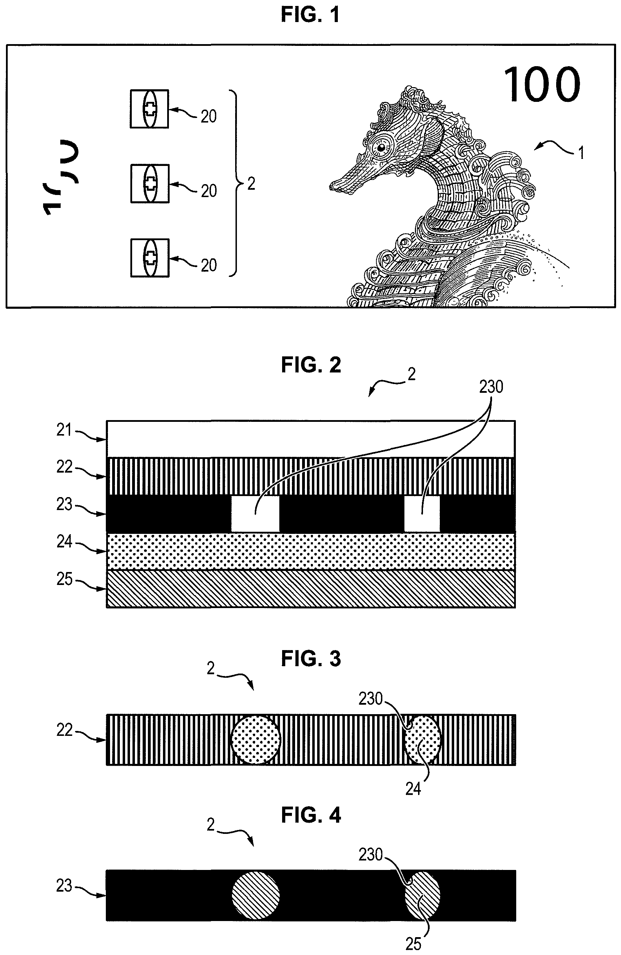

A la figure 1 est représenté très schématiquement un document de sécurité, en l'occurrence un billet de banque, qui comporte un élément de sécurité 2 en forme de bandeau qui est incorporé au sein de celui-ci tout en émergeant à la surface d'au moins une de ses grandes faces visibles, sous la forme d'au moins une fenêtre, en l'occurrence trois fenêtres représentées ici à simple titre d'exemple .

Conformément à l'invention, l'élément de sécurité multicouche 2, comporte un support plan et transparent ou translucide 21 qui peut être à titre d'exemple du polyéthylène téréphtalate (PET) et est caractérisé par le fait que l'une des faces opposées de ce support est revêtue des couches successives suivantes :
a) une couche à effet optique variable 22, c'est à dire qui, sous observation du support, ménage au moins un changement d'aspect visuellement perceptible à l'œil nu, en fonction des conditions d'observation ;
b) une couche opaque sombre 23 qui présente au moins un ajour ;
c) une couche semi-réfléchissante 24, c'est à dire qui est réfléchissante lors d'une observation du support en lumière réfléchie, et qui est transparente lors d'une observation du support par transmission, cette couche semi-réfléchissante étant présente au moins en regard d'une partie dudit ajour ;
d) une couche visible 25, c'est à dire visible aussi bien en lumière réfléchie que par transmission, qui est présente au moins à l'aplomb de la (des) région(s) où la couche semi-réfléchissante est présente.

Dans la description qui suit, on s'attachera à décrire les couches à propriétés optiques 22 à 25 de la structure de l'élément 2 et non les couches fonctionnelles habituelles. On entend par l'expression "couches fonctionnelles" les couches telles que les vernis thermo scellants situés en surface de l'élément 2 et destinés à sa bonne adhésion dans la masse fibreuse de papier qui constitue le document de sécurité 1 dans lequel il est incorporé. On entend également les colles de complexage employées pour solidariser le support à des couches à fonction uniquement esthétique ou à effets optiques, le polyéthylène téréphtalate de protection (formant « couvercle ») ou bien encore les vernis de protection si ce couvercle est omis. Enfin, les constructions proposées ne font pas apparaître les couches de lisibilité automatique par machine, c'est-à-dire celles qui sont utilisés dans les machine de tri comme par exemple la conductivité électrique et le magnétisme simple ou à code.

L'élément de sécurité comporte donc un support plan, transparent ou translucide, qui est composé par exemple d'un matériau polymérique tel que du polyéthylène téréphtalate, qui est revêtu, préférentiellement du même côté, de couches superposées dont l'épaisseur totale est de préférence inférieure à 45 µm (couches selon l'invention et couches fonctionnelles). Ces différentes couches sont mises en place successivement, de préférence par impression. Cette technique est particulièrement bien adaptée à la réalisation de l'invention et comme dans tout procédé industriel, la mise en œuvre de cette technique se confronte à des limites, à des tolérances de fabrication.

Ainsi, il est entendu dans la présente demande qu'au moins deux couches ou deux motifs appliqués par impression et même selon d'autres techniques, lorsqu'ils sont en repérage (ou en registre), quand ils sont bord à bord (ou contigus), quand ils sont à l'aplomb l'un de l'autre en totalité etc... sont des termes théoriques, valides sur les figures, les plans et les "layouts", mais qui souffrent en réalité d'écarts de placement minimes consécutifs à leur réalisation.

Il est par exemple usuel de constater des tolérances d'impression entre deux groupes consécutifs de l'ordre de +/- 0,15 mm alors qu'il faut envisager des tolérances d'au moins +/- 0,25 mm lorsque l'on a deux procédés distincts ou deux passages qui ne sont pas en ligne.

Les termes employés constituent de ce fait des buts au mieux atteints et au pire des objectifs vers lesquels on s'efforce de tendre.

A titre de couche à effet optique variable, on utilisera de préférence, une couche d'encre à pigments interférentiels de type iridescents ou bien une encre variable optiquement (connue sous l'acronyme « OVI »). On peut citer, à simple titre d'exemple, les encres "65E013V" et "63E021V" de la société SICPA ou bien les encres "SUNNOTE 24926" ou "24927" de la société Sun Chemical.

On peut également utiliser les encres à cristaux liquides, notamment celles de la gamme LUMOGEN de la société BASF. Les cristaux liquides se présentent sous forme de bâtonnets qui restent en moyenne parallèles entre eux. Trois grandes phases se distinguent : nématique, smectique et cholestérique.

La phase nématique est la moins ordonnée, les molécules sont simplement alignées parallèlement. La phase cholestérique est un arrangement hélicoïdal de molécules chirales. On parle d'empilement continu de plans dans chacun desquels règne un ordre nématique.

Dans la formulation d'une encre à cristaux liquides, on utilise une phase nématique (de l'ordre de 95%) à laquelle on ajoute un dopant chiral (de l'ordre de 5%). La structure hélicoïdale induite par le dopant chiral provoque un effet d'interférence lumineuse responsable de l'effet de changement de couleur de la lumière réfléchie.

La longueur d'onde réfléchie est fonction du pas de l'hélice. On peut ainsi faire varier ce pas en dosant la quantité de dopant de manière à changer les effets de couleurs en réflexion.

Un effet supplémentaire produit par les cristaux liquides est la polarisation circulaire de la lumière réfléchie (et également transmise). Cela permet donc en utilisant un filtre polarisant d'éteindre certaines couleurs perçues en réflexion.

Comme indiqué plus haut, la couche opaque et sombre est idéalement noire. Elle est nécessaire pour révéler l'effet de changement de couleur des dispositifs précédemment cités qui sont, par nature, semi-transparents.

En effet, lorsque la lumière traverse une structure en cristaux liquides superposée à une couche opaque sombre, ce sont principalement les rayons réfléchis par la dite structure qui seront visibles (les autres étant absorbés par la couche opaque dessous). Ainsi l'effet de changement de couleur attendu est efficace. Si la couche opaque était, au contraire, claire voire brillante, d'autres longueurs d'ondes seraient réfléchies et perturberaient la lisibilité de la couleur attendue des cristaux liquides.

On pourra par exemple utiliser la gamme d'encre "67E023" de la société SICPA ou bien SUN CHEMICAL à titre d'exemple et sans que ce soit limitatif.

Selon d'autres modes de fabrication , cette encre pourra par exemple incorporer des propriétés de conductivité, magnétisme, fluorescence, phosphorescence, visibilité infrarouge ou tout autre traceur susceptible d'authentifier cette couche.

Pour la couche semi-réfléchissante, on peut par exemple utiliser la gamme d'encre "67E060" de la société SICPA ou bien la gamme "SunNote Mirror" de la société SUN CHEMICAL ou encore "Platinstar" ou "Ultrastar" de la société FLINT.

On peut également utiliser un mélange de nanoparticules d'argent, par exemple la gamme "METASHEEN" de la société BASF associé à une matrice nitrocellulosique et un mélange de solvants.

Un certain nombre d'avantages quant à l'utilisation d'une encre semi réfléchissante, par opposition au dépôt sous vide, sont énumérés ci-après.

D'une part, l'encre semi réfléchissante étant employée à la suite des autres couches dans le processus d'impression, elle peut être mise en registre précis par rapport aux autres encres, pourvu que la presse dispose de suffisamment de groupes d'impression en ligne. Ceci permet une liberté de formes impossibles à obtenir lorsqu'il s'agit d'utiliser un procédé à plusieurs étapes type dépôt sous vide et démétallisation.

Par ailleurs, on peut, grâce à une technique d'impression, faire varier très facilement le dépôt d'encre et donc l'opacité de la couche. Ceci est notamment possible en héliogravure mais impossible avec un procédé de dépôt sous vide où la cible de dépôt est préfixée à l'avance et déterminée sur toute la laize du film.

On peut également obtenir de nombreuses teintes de métal par l'utilisation de colorants ou de pigments dans l'encre semi réfléchissante. Ceci permet d'obtenir par exemple les effets de teintes métalliques suivants : argent, or, bronze, cuivre mais également des teintes plus standard : bleu, rouge, vert, celle d'un pantone ou autres.

On pourra, dans un mode préférentiel de réalisation, utiliser une trame d'impression avec cette encre de manière à nuancer l'aspect semi réfléchissant et avoir un levier d'action supplémentaire. On pourra par exemple utiliser des trames de points circulaires ou de forme quelconque ou de lignes aléatoires ou fixes avec des taux de couvertures allant de 0 à 100 % et préférentiellement supérieur à 50%.

Enfin, on pourra utiliser le caractère semi réfléchissant de l'encre à des fins de masquage. En effet, la couche opaque étant sombre, elle peut, lorsque le bandeau est inséré dans le papier, laisser une marque noire, visible depuis la face opposée du support. Cet aspect disgracieux est évité en utilisant les propriétés de masquage de la couche semi réfléchissante.

Selon un mode préférentiel, cette encre pourra par exemple incorporer des propriétés de conductivité, magnétisme, fluorescence, phosphorescence, visibilité infrarouge ou tout autre traceur susceptible d'authentifier cette couche.

La couche visible est préférentiellement constituée d'une encre à base de colorants ou de pigments fournissant une teinte visible.

On pourra avantageusement utiliser des agents fluorescents, phosphorescents, magnétiques, visibles sous rayonnement infrarouge, etc., susceptibles d'apporter un niveau de sécurité supplémentaire dans cette couche.

Nous allons maintenant décrire successivement les modes de réalisation de l'invention qui sont représentés aux figures 2 et suivantes.

Ainsi, en référence à la figure 2, un support 21 en plastique transparent de type PET est revêtu, sur sa face interne, d'une couche optiquement variable semi transparente 22. Dans cette variante, la couche 22 est continue, c'est à dire dépourvue d'ajour.

Au-dessous de la couche 22 est présente une couche opaque noire 23 qui présente ici deux ajours ou évidements 230 de forme circulaire. Cette forme et le nombre d'ajours ne sont bien entendu pas figés. Une couche semi réfléchissante 24 (continue et sans ajours) recouvre la couche 23, y compris ses ajours 230. Enfin, une couche colorée 25 recouvre en totalité la couche semi réfléchissante 24.

A la figure 3, on observe l'élément 2 en réflexion au travers du support 21 selon un angle de 90° (c'est-à-dire que l'observateur se trouve à la normale de l'élément de sécurité inspecté). A l'aplomb de la couche optiquement variable 22 est visible une première couleur, par exemple verte. En inclinant le support jusqu'à un angle d'environ 30°, la couleur passe par exemple au bleu. A l'aplomb des ajours 230, la couche optiquement variable 22 est transparente et on observe l'encre semi-réfléchissante de la couche 24.

On observe ensuite, selon la figure 4, l'élément 2 en transparence, avec notamment une source lumineuse ponctuelle se trouvant derrière l'élément de sécurité. A l'aplomb des évidements, la couche semi réfléchissante 24 apparaît transparente et révèle la couche colorée 25.

Selon un mode préférentiel, la couche semi-réfléchissante 24 est choisie parmi les encres métalliques de type argent ou aluminium, de telle sorte que sa teinte soit discrète et se fonde bien dans la nuance du papier. Ceci est particulièrement appréciable puisqu'il permet à un observateur d'assimiler les évidements avec un « Cleartext » traditionnel. Ce n'est qu'en observant ces évidements par transparence que l'effet de couleur est révélé.

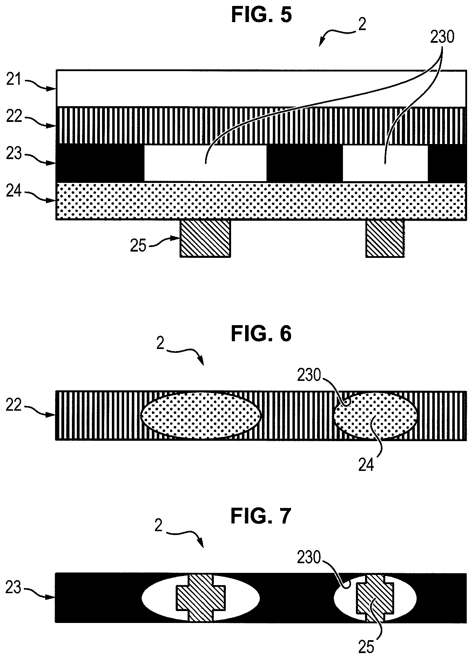

Dans la variante des figures 5 à 7, les couches 22 et 24 sont identiques à celles du mode de réalisation précédent. La couche opaque 23 présente toujours des ajours 230, mais cette fois-ci, de contour ovale.

En revanche, la couche colorée 25 n'est présente que sous forme de motifs qui ont ici une forme de croix grecque et sont disposés à l'aplomb des ajours 230.

Selon le mode d'observation de la figure 6, la couche semi réfléchissante 24 apparaît légèrement métallisée.

Lorsqu'on observe l'élément de sécurité en transparence, comme visible en figure 7, la couche semi réfléchissante 24 devient transparente et l'on perçoit la couche colorée 25 sous la forme de deux croix.

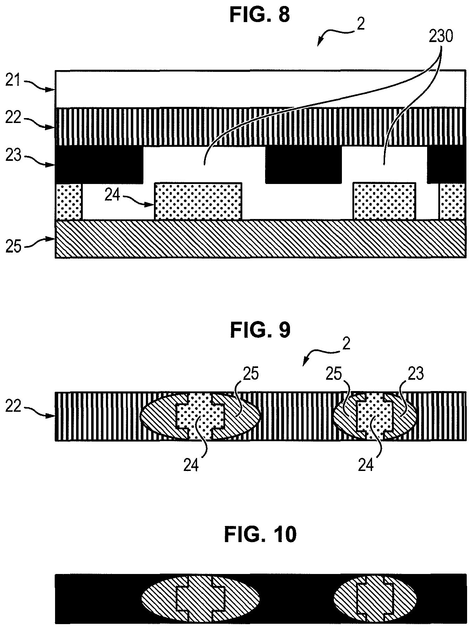

Dans le mode de réalisation suivant des figures 8 à 10, la couche 22 est inchangée, de même que la couche 23.

La couche semi-réfléchissante 24 est présente sous la forme de motifs représentant deux croix grecques. Quant à la couche colorée 25, elle occupe toute la surface de l'élément.

Dans ces conditions et sous observation par réflexion (figure 9), les croix de la couche 24 sont visibles à travers les ajours 23, mais apparaissent sur un fond constitué par la couche 25.

La figure 10 représente l'élément 2 vu en transparence. On discerne toujours les croix de la couche 24, mais selon une couleur qui est celle de la couche 25.

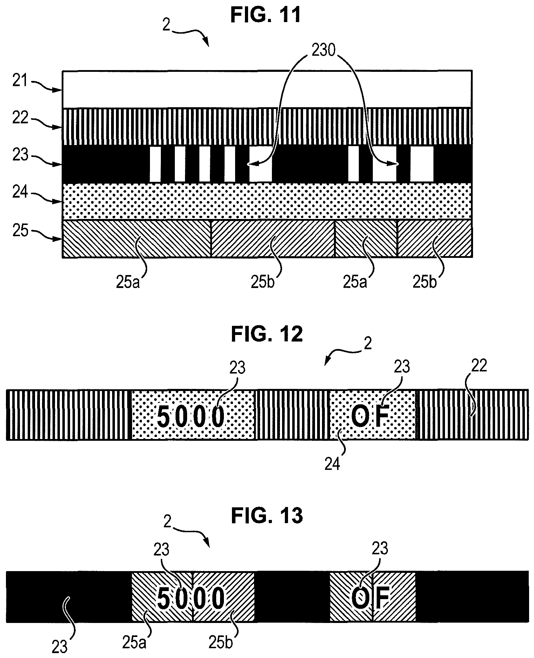

A la figure 11, on a représenté une autre variante de l'élément de sécurité 2 dans laquelle deux couches colorées différentes, références 25a et 25b, constituent la couche 25.

Les couches 22 et 24 sont pleines et occupent la surface totale de l'élément 2.

La couche 23 présente deux ajours 230 de forme rectangulaire. Toutefois, à l'intérieur de ces ajours sont présentes plusieurs régions imprimées qui constituent d'une part la valeur "5000" et, d'autre part, le sigle "OF."

Lorsqu'on l'observe en réflexion (figure 12), à l'intérieur des ajours 230 apparaissent la valeur "5000" et le sigle "OF". Le contour de ces motifs apparaît alors d'aspect métallisé caractéristique de la couche semi réfléchissante 24.

En transparence (figure 13), la zone est séparée en deux, avec des couleurs différentes qui sont celles des zones référencées 25a et 25b. Bien entendu, on peut envisager de recourir à plus de deux couleurs.

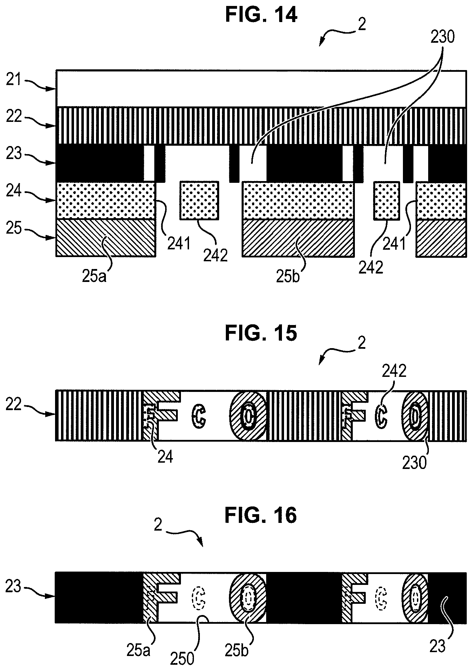

Selon la figure 14, la couche opaque 23 présente des ajours 230 de forme rectangulaire. La couche semi réfléchissante 24 comporte également des ajours 241 qui sont disposés en regard des ajours 230 et sont intégralement contenus dans ceux-ci. De plus, à l'intérieur de ces ajours 241 sont présents des motifs 242 d'encre qui forment ensemble le sigle "FCO" visible en réflexion au travers du support 21.

La couche 25 comporte deux couleurs différentes 25a et 25b, avec des ajours 250 qui se superposent exactement à ceux 241 de la couche 24.

En transparence, on observe alors les lettres "FO" représentées en deux couleurs.

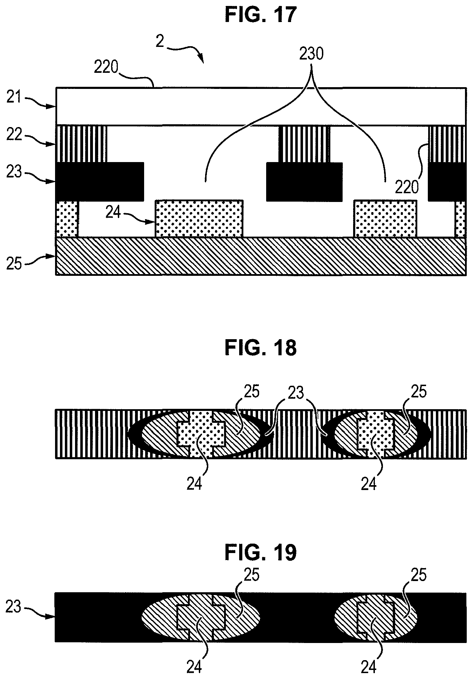

Dans le mode de réalisation des dernières figures 17 à 19, la couche 22 comporte deux ajours 220 à contour ovale.

La couche opaque 23 comporte aussi deux ajours ovales 230. Ces derniers s'étendent à l'aplomb des ajours 220 et sont intégralement contenus dans ceux-ci.

La couche semi réfléchissante 24 n'est présente que sous la forme de deux crois grecques intégralement contenues dans les ajours précités.

Enfin, la couche 25 est continue et occupe la surface totale de l'élément.

En vision par réflexion (figure 18), la couche opaque 23 n'est visible que partiellement à travers les ajours de la couche 22, sous la forme de paires de "parenthèses". La couche 24 est visible sous la forme des croix précitées, tandis que la couche 25 entoure ces croix et est "encadrée" par les "parenthèses".

Lorsqu'on observe l'élément de sécurité en transparence, comme décrit en figure 19, la couche semi réfléchissante 24 devient transparente et l'on perçoit la couche colorée 25 au sein de laquelle sont matérialisées les croix précitées.

## Revendications

1. Elément de sécurité (2) multicouche, qui comporte un support plan et transparent ou translucide (21), **caractérisé par le fait que** l'une des faces opposées de ce support (21) est revêtue des couches successives suivantes :
a) une couche à effet optique variable (22), c'est à dire qui, sous observation du support (21), ménage au moins un changement d'aspect visuellement perceptible à l'œil nu, en fonction des conditions d'observation ;
b) une couche opaque sombre (23) qui présente au moins un ajour (230) ;
c) une couche semi-réfléchissante (24), c'est à dire qui est réfléchissante lors d'une observation du support (21) en lumière réfléchie, et qui est transparente lors d'une observation du support par transmission, cette couche semi-réfléchissante (24) étant présente au moins en regard d'une partie dudit ajour (230) ;
d) une couche visible (25), c'est à dire visible aussi bien en lumière réfléchie que par transmission, qui est présente au moins partiellement à l'aplomb de la (des) région(s) où la couche semi-réfléchissante (24) est présente.

2. Elément de sécurité (2) selon la revendication 1, **caractérisé par le fait que** ladite couche optiquement variable (22) est semi-transparente, c'est à dire réfléchissante en vision par réflexion et transparente en vision par transmission.

3. Elément de sécurité (2) selon l'une des revendications 1 ou 2, **caractérisé par le fait que** lesdites couche semi-réfléchissante (24) et couche visible (25) sont dépourvues d'ajours et occupent au moins la même surface que la surface totale de ladite couche opaque (23).

4. Elément de sécurité (2) selon l'une des revendications 1 ou 2, **caractérisé par le fait que** ladite couche semi-réfléchissante (24) est dépourvue d'ajour et occupe au moins la même surface que la surface totale de ladite couche opaque (23), tandis que ladite couche visible (25) est présente seulement en regard dudit au moins un ajour (230) de ladite couche opaque (23) et selon une surface totale qui est inférieure à celle dudit au moins un ajour (230).

5. Elément de sécurité (2) selon l'une des revendications 1 ou 2, **caractérisé par le fait que** ladite couche semi-réfléchissante (24) est présente seulement en regard dudit au moins un ajour (230) de ladite couche opaque (23) et selon une surface totale qui est inférieure à celle dudit au moins un ajour (230), tandis que la couche visible (25) est dépourvue d'ajour et occupe au moins la même surface que la surface totale de ladite couche opaque (23).

6. Elément de sécurité (2) selon l'une des revendications 1 ou 2 dans lequel ladite couche opaque (23) comporte au moins deux ajours (230), **caractérisé par le fait que** ladite couche semi-réfléchissante (24) et la couche visible (25) sont dépourvues d'ajour et occupent au moins la même surface que la surface totale de ladite couche opaque (23), cette couche visible (25) étant formée d'au moins deux régions contiguës respectivement d'une première et d'une seconde couleur (25a ; 25b), chaque couleur s'étendant en regard d'au moins un ajour (230).

7. Elément de sécurité (2) selon l'une des revendications 1 ou 2, **caractérisé par le fait que** lesdites couche semi-réfléchissante (24) et couche visible (25) comportent chacune au moins une fenêtre (241, 250), que ces fenêtres sont superposées et s'étendent à l'aplomb de chaque ajour (230) tout en étant complètement comprises dans cet ajour (230), et que ladite couche semi-réfléchissante (24) comporte à l'intérieur de ladite fenêtre (241) au moins une région semi-réfléchissante (242).

8. Elément de sécurité (2) selon l'une des revendications précédentes, **caractérisé par le fait que** ladite couche à effet optique variable (22) présente au moins un ajour.

9. Elément de sécurité (2) selon l'une des revendications précédentes, **caractérisé par le fait que** les matériaux des différentes couches sont choisis dans la liste suivante :
A/ couche à effet optique variable (22) : encre à pigments interférentiels notamment iridescents ou encres variable optiquement ; encres magnétiques variables optiquement ; encres à cristaux liquides ; couches variables optiquement déposées sous vide ; couches présentant des structures diffractantes ou réfléchissantes ; couches présentant des systèmes micro-optiques lenticulaires ou à lentilles ; couches à cristaux photoniques ;
B/ autres couches : encres incorporant des matériaux présentant des propriétés de conductivité, magnétisme, fluorescence, phosphorescence, de visibilité en infrarouge.

10. Elément de sécurité (2) selon l'une des revendications précédentes, **caractérisé par le fait qu'**il se présente sous la forme d'un fil ou d'un bandeau ou d'un pavé de forme quelconque.

11. Document de sécurité (1) tel qu'un billet de banque, **caractérisé par le fait qu'**il intègre un élément (2) selon la revendication précédente qui, lorsqu'il consiste en un fil, est incorporé au sein de celui-ci tout en émergeant à la surface d'au moins une de ses faces visibles, sous la forme d'au moins une fenêtre (20) en un bandeau ou un pavé.

12. Document de sécurité (1) tel qu'un billet de banque, **caractérisé par le fait qu'**il intègre un élément (2) selon la revendication précédente qui, lorsqu'il consiste en un bandeau ou un pavé, est appliqué sur celui-ci ou sur une fenêtre transparente qu'il comporte.

## Patentansprüche

1. Mehrschichtiges Sicherheitselement (2), das einen ebenen und transparenten oder durchsichtigen Träger (21) umfasst, **dadurch gekennzeichnet, dass** eine von den entgegengesetzten Seiten dieses Trägers (21) mit den folgenden aufeinanderfolgenden Schichten bedeckt ist:
a) einer Schicht (22) mit variablem optischem Effekt, das heißt, die bei der Betrachtung des Trägers (21) mindestens eine Änderung des Aussehens, die visuell mit bloßem Auge wahrnehmbar ist, in Abhängigkeit von den Betrachtungsbedingungen vorsieht;
b) einer dunklen opaken Schicht (23), die mindestens einen Durchbruch (230) aufweist;
c) einer semireflektierenden Schicht (24), das heißt, die bei einer Auflichtbetrachtung des Trägers (21) reflektierend ist und die bei einer Durchlichtbetrachtung des Trägers transparent ist, wobei diese semireflektierende Schicht (24) zumindest einem Teil des Durchbruchs (230) gegenüberstehend vorhanden ist;
d) einer sichtbaren Schicht (25), das heißt, die sowohl bei Auflicht- als auch bei Durchlichtbetrachtung sichtbar ist, die zumindest teilweise senkrecht zu der (den) Region/en vorhanden ist, wo die semireflektierende Schicht (24) vorhanden ist.

2. Sicherheitselement (2) nach Anspruch 1, **dadurch gekennzeichnet, dass** die optisch variable Schicht (22) semitransparent ist, das heißt bei Auflichtbetrachtung reflektierend und bei Durchlichtbetrachtung transparent ist.

3. Sicherheitselement (2) nach einem der Ansprüche 1 oder 2, **dadurch gekennzeichnet, dass** die semireflektierende Schicht (24) und die sichtbare Schicht (25) keine Durchbrüche aufweisen und zumindest die gleiche Fläche wie die Gesamtfläche der opaken Schicht (23) einnehmen.

4. Sicherheitselement (2) nach einem der Ansprüche 1 oder 2, **dadurch gekennzeichnet, dass** die semireflektierende Schicht (24) keinen Durchbruch aufweist und mindestens die gleiche Fläche wie die Gesamtfläche der opaken Schicht (23) einnimmt, während die sichtbare Schicht (25) nur dem mindestens einen Durchbruch (230) der opaken Schicht (23) gegenüberstehend und gemäß einer Gesamtfläche vorhanden ist, die kleiner als diejenige des mindestens einen Durchbruchs (230) ist.

5. Sicherheitselement (2) nach einem der Ansprüche 1 oder 2, **dadurch gekennzeichnet, dass** die semireflektierende Schicht (24) nur dem mindestens einen Durchbruch (230) der opaken Schicht (23) gegenüberstehend und gemäß einer Gesamtfläche vorhanden ist, die kleiner als diejenige des mindestens einen Durchbruchs (230) ist, während die sichtbare Schicht (25) keinen Durchbruch aufweist und mindestens die gleiche Fläche wie die Gesamtfläche der opaken Schicht (23) einnimmt.

6. Sicherheitselement (2) nach einem der Ansprüche 1 oder 2, wobei die opake Schicht (23) mindestens zwei Durchbrüche (230) umfasst, **dadurch gekennzeichnet, dass** die semireflektierende Schicht (24) und die sichtbare Schicht (25) keinen Durchbruch aufweisen und mindestens die gleiche Fläche wie die Gesamtfläche der opaken Schicht (23) aufweisen, wobei diese sichtbare Schicht (25) aus mindestens zwei angrenzenden Regionen mit einer ersten beziehungsweise einer zweiten Farbe (25a; 25b) gebildet ist, wobei jede Farbe sich dem mindestens einen Durchbruch (230) gegenüberstehend erstreckt.

7. Sicherheitselement (2) nach einem der Ansprüche 1 oder 2, **dadurch gekennzeichnet, dass** die semireflektierende Schicht (24) und die sichtbare Schicht (25) jeweils mindestens ein Fenster (241, 250) aufweisen, dass diese Fenster übereinanderliegen und sich senkrecht zu jedem Durchbruch (230) erstrecken und dabei vollständig in diesem Durchbruch (230) enthalten sind, und dass die semireflektierende Schicht (24) im Inneren des Fensters (241) mindestens eine semireflektierende Region (242) umfasst.

8. Sicherheitselement (2) nach einem der vorhergehenden Ansprüche, **dadurch gekennzeichnet, dass** die Schicht (22) mit variablem optischem Effekt mindestens einen Durchbruch aufweist.

9. Sicherheitselement (2) nach einem der vorhergehenden Ansprüche, **dadurch gekennzeichnet, dass** die Materialien der verschiedenen Schichten aus der folgenden Liste ausgewählt sind:
A/ Schicht mit variablem optischem Effekt (22): Farbe mit Interferenzpigmenten, insbesondere irisierenden oder optisch variablen Farben; optisch variable Magnetfarben; Flüssigkristallfarben; unter Vakuum abgeschiedene optisch variable Schichten; Schichten, die beugende oder reflektierende Strukturen aufweisen; Schichten, die linsenförmige mikrooptische Systeme oder mit Linsen aufweisen; Schichten mit photonischen Kristallen;
B/ andere Schichten: Farben, die Materialien aufnehmen, die Leitfähigkeits-, magnetische, Fluoreszenz-, Phosphoreszenz-, Infrarot-Sichtbarkeit-Eigenschaften aufweisen.

10. Sicherheitselement (2) nach einem der vorhergehenden Ansprüche, **dadurch gekennzeichnet, dass** es die Form eines Fadens oder eines Bandes oder eines Blocks mit beliebiger Form aufweist.

11. Sicherheitsdokument (1), wie beispielweise eine Banknote, **dadurch gekennzeichnet, dass** es ein Element (2) nach dem vorhergehenden Anspruch aufnimmt, das, wenn es aus einem Faden besteht, in dessen Inneren aufgenommen ist und dabei auf mindestens einer seiner sichtbaren Seiten in der Form von mindestens einem Fenster (20) als ein Band oder ein Block hervorragt.

12. Sicherheitsdokument (1), wie beispielsweise eine Banknote, **dadurch gekennzeichnet, dass** es ein Element (2) nach dem vorhergehenden Anspruch einbezieht, das, wenn es aus einem Band oder einem Block besteht, darauf oder auf einem transparenten Fenster, das es umfasst, aufgebracht ist.

## Claims

1. Multilayer security element (2) comprising a transparent or translucent planar substrate (21), **characterized by** the fact that one of the opposing surfaces of this substrate (21) is coated with the following successive layers:
a) a layer with variable optic effect (22), i.e. which, when the substrate (21) is viewed, affords at least one change in appearance visually perceived by the naked eye, depending on viewing conditions;
b) a dark opaque layer (23) having at least one openwork (230);
c) a semi-reflective layer (24), i.e. that is reflective when the substrate (21) is viewed in reflected light, and is transparent when the substrate is viewed in transmission, this semi-reflective layer (24) being present at least facing part of said openwork (230);
d) a visible layer (25), i.e. visible both in reflected light and in transmission, being present at least in line with the region(s) containing the semi-reflective layer (24).

2. Security element (2) according to claim 1, **characterized by** the fact that said optically variable layer (22) is semi-transparent, i.e. reflective when viewed in reflection and transparent when viewed in transmission.

3. The security element (2) according to one of claims 1 or 2, **characterized by** the fact that said semi-reflective (24) and visible layers (25) are devoid of openwork and occupy at least the same surface area as the total surface area of said opaque layer (23).

4. The security element (2) according to one of claims 1 or 2, **characterized by** the fact that said semi-reflective layer (24) is devoid of openwork and occupies at least the same surface area as the total surface area of said opaque layer (23), whilst said visible layer (25) is only present facing said at least one openwork (230) of said opaque layer (23) and over a total surface area that is smaller than that of said at least one openwork (230).

5. The security element (2) according to one of claims 1 or 2, **characterized by** the fact that said semi-reflective layer (24) is only present facing said at least one openwork (230) of said opaque layer (23) and over a total surface area that is smaller than that of said at least one openwork (230), whilst the visible layer (25) is devoid of openwork and occupies at least the same surface area as the total surface area of said opaque layer (23).

6. The security element (2) according to one of claims 1 or 2, wherein said opaque layer (23) comprises at least two openworks (230), **characterized by** the fact that said semi-reflective layer (24) and the visible layer (25) are devoid of openwork and occupy at least the same surface area as the total surface area of said opaque layer (23), this visible layer (25) being formed of at least two contiguous regions of a first and a second colour (25a; 25b) respectively, each colour extending opposite at least one openwork (230).

7. The security element (2) according to one of claims 1 or 2, **characterized in** by the fact that said semi-reflective (24) and visible (25) layers each comprise at least one window (241, 250), **in that** these windows are superimposed and extend in line with each openwork (230) whilst being fully included in this openwork (230), and **in that** said semi-reflective layer (24) inside said window (241) comprises at least one semi-reflective region (242).

8. The security element (2) according to one of the preceding claims, **characterized by** the fact that said layer with variable optic effect (22) has at least one openwork.

9. The security element (2) according to one of the preceding claims, **characterized by** the fact that the materials of the different layers are selected from the following list:
A/ layer with variable optic effect (22): ink with interference pigments, notably iridescent, or optically variable inks; optically variable magnetic inks; liquid crystal inks; vacuum-deposited optically variable layers; layers having diffractive or reflective structures; layers having lenticular micro-optical or lens systems; layers with photonic crystals;
B/ other layers: inks incorporating materials having conductivity, magnetism, fluorescence, phosphorescence, infrared-visibility properties.

10. The security element (2) according to one of the preceding claims, **characterized by** the fact that it is in the form of a thread or strip or patch of any shape.

11. Security document (1) such as a banknote, **characterized by** the fact that it integrates an element (2) according to the preceding claim which, when it consists in a thread, is incorporated therein whilst emerging onto the surface of at least one of its visible faces, in the form of at least one window (20) in a strip or patch.

12. Security document (1) such as a banknote, **characterized by** the fact that it integrates an element (2) according to the preceding claim which, when it consists in a strip or patch, is applied thereto or onto a transparent window contained therein.
